# EUROPÄISCHE PATENTSCHRIFT

(11) **EP 3 898 342 B1**
(45) Veröffentlichungstag und Bekanntmachung des Hinweises auf die Patenterteilung: **09.11.2022**
(21) Anmeldenummer: 19813253.2
(22) Anmeldetag: 25.11.2019
(51) Int. Cl.: B60R 21/203

(54) **LENKVORRICHTUNGSBAUGRUPPE SOWIE VERFAHREN ZUR MONTAGE EINES GASSACKMODULS AN EINER LENKVORRICHTUNG EINES KRAFTFAHRZEUGS**
STEERING DEVICE ASSEMBLY AND METHOD FOR MOUNTING A GAS BAG MODULE ON A STEERING DEVICE OF A MOTOR VEHICLE
ENSEMBLE DISPOSITIF DE DIRECTION ET PROCÉDÉ DE MONTAGE D'UN MODULE DE SAC À GAZ SUR UN DISPOSITIF DE DIRECTION D'UN VÉHICULE AUTOMOBILE

(30) Priorität: 18.12.2018 DE 102018132646
(43) Veröffentlichungstag der Anmeldung: 27.10.2021
(73) Patentinhaber: ZF Automotive Safety Germany GmbH, 63743 Aschaffenburg (DE)
(72) Erfinder: HAAS, Markus, 64760 Oberzent (DE)
(74) Vertreter: ZF Patentabteilung - DIPS
(86) Internationale Anmeldenummer: PCT/EP2019/082413
(87) Internationale Veröffentlichungsnummer: WO 2020/126325

(56) Entgegenhaltungen:
- DE-U1- 29 621 295
- US-A1- 2009 315 304

## Beschreibung

Die Erfindung betrifft eine Lenkvorrichtungsbaugruppe zur Positionierung und Fixierung eines Gassackmoduls an einer um eine Lenkachse drehbaren Lenkvorrichtung eines Kraftfahrzeugs mit den Merkmalen im Oberbegriff des Anspruchs 1 sowie ein Verfahren zur Montage eines Gassackmoduls an einer Lenkvorrichtung eines Kraftfahrzeugs.

Heutzutage umfassen herkömmliche Lenkvorrichtungsbaugruppen meist eine drehbare Lenkvorrichtung, insbesondere ein Lenkrad, sowie ein im Nabenbereich der Lenkvorrichtung befestigtes Gassackmodul, wobei am Gassackmodul starre Rasthaken zur Verrastung mit der Lenkvorrichtung vorgesehen sein können. Die Montage des Gassackmoduls erfolgt beispielsweise mittels zweier Rastmechanismen, die unterschiedliche Aufgaben erfüllen. Die starren Rasthaken verrasten dabei mit einem an der Lenkvorrichtung vormontierten, elastischen Federdraht (erster Rastmechanismus) und greifen darüber hinaus in Schaumtaschen der Lenkvorrichtung ein, mit denen sie ebenfalls verrasten (zweiter Rastmechanismus). Der erste Rastmechanismus stellt nach einer Aktivierung des Gassackmoduls sicher, dass sich das Gassackmodul auch bei hohen auftretenden Kräften nicht von der Lenkvorrichtung trennt, sondern zuverlässig mit dieser verbunden bleibt. Im normalen Fahrbetrieb, das heißt also vor einer Aktivierung des Gassackmoduls, kann der elastische Federdraht von den starren Rasthaken beabstandet sein. Die exakte Positionierung des Gassackmoduls gewährleistet dann der zweite Rastmechanismus.

Mit Blick auf den zweiten Rastmechanismus ist in der Regel eine aufwendige, nachträgliche Kalibrierung der Gassackmodule notwendig, um im normalen Fahrbetrieb die hohen Spaltmaßanforderungen zwischen Gassackmodul und Lenkvorrichtung erfüllen zu können. Aufgrund langer Toleranzketten sowie fertigungsbedingter Toleranzen, insbesondere der Schaumtaschen, ist jedoch nicht nur eine exakte Positionierung des Gassackmoduls, sondern auch das präzise Einstellen einer gewünschten Rastkraft problematisch. So kann es vorkommen, dass ein Monteur bei der Montage/Demontage des Gassackmoduls eine unerwünscht hohe Kraft zum Schließen oder Lösen des zweiten Rastmechanismus aufbringen muss.

Die gattungsgemäße US 2009/315304 A1 zeigt bereits eine Lenkvorrichtungsbaugruppe mit den Merkmalen im Oberbegriff des Anspruchs 1, durch die ein Gassackmodul an einer Lenkvorrichtung eines Kraftfahrzeugs verrastet werden kann. Die Verrastung erfolgt dabei mittels eines schwenkbar gelagerten Hebels, der einen elastischen Abschnitt und einen im Wesentlichen starren Abschnitt aufweist.

Aufgabe der Erfindung ist es, eine Lenkvorrichtungsbaugruppe zu schaffen, bei der sich mit geringem Aufwand eine besonders exakte Feinpositionierung des Gassackmoduls relativ zur Lenkvorrichtung realisieren sowie eine in sehr engen Grenzen reproduzierbare Rastkraft einstellen lässt.

Erfindungsgemäß wird diese Aufgabe gelöst durch eine Lenkvorrichtungsbaugruppe zur Positionierung und Fixierung eines Gassackmoduls an einer um eine Lenkachse drehbaren Lenkvorrichtung eines Kraftfahrzeugs, mit einem ersten Positionierungskörper umfassend einen Rasthebel, der einen ersten Schenkel sowie einen mit dem ersten Schenkel verbundenen zweiten Schenkel aufweist, einen Träger, an dem der Rasthebel zwischen einer Ausgangsstellung und einer Endmontagestellung schwenkbar gelagert ist, und ein Federelement zur Beaufschlagung des Rasthebels in die Endmontagestellung, wobei die Schenkel des Rasthebels an einem Schenkelende miteinander verbunden sind und sich unter einem vorgegebenen Winkel jeweils zu einem entgegengesetzten freien Schenkelende erstrecken, sowie mit einem zweiten Positionierungskörper umfassend einen Anschlag für das freie Schenkelende des ersten Schenkels zum Verschwenken des Rasthebels von der Ausgangsstellung in die Endmontagestellung und eine Rastkontur zur Verrastung mit dem freien Schenkelende des zweiten Schenkels in der Endmontagestellung des Rasthebels.

Die Feinausrichtung und Rastkrafteinstellung zwischen den beiden Positionierungskörpern, insbesondere zwischen Gassackmodul und Lenkvorrichtung der Lenkvorrichtungsbaugruppe, ist nun nicht mehr von der stark toleranzbehafteten Geometrie und Kompressibilität der Schaumtaschen in der Lenkvorrichtung abhängig, sondern von einem federbeaufschlagten Rasthebel, der hinsichtlich Feinausrichtung und Rastkraft mit geringem Aufwand deutlich präziser einstellbar ist.

Mit Bezug auf die Lenkachse kann sich in der Endmontagestellung des Rasthebels der zweite Schenkel im Wesentlichen in radialer Richtung erstrecken. Dies führt zu einer besonders stabilen Positionierung des Gassackmoduls relativ zur Lenkvorrichtung, da der zweite Schenkel die bei einer äußeren Anregung quer zur Lenkachse auftretenden Kräfte weiterleitet, ohne dass ein Drehmoment auf den Rasthebel wirkt. In der Ausgangsstellung des Rasthebels erstreckt sich bevorzugt der erste Schenkel im Wesentlichen in radialer Richtung. Der Rasthebel lässt sich auf diese Weise besonders kompakt ausführen und bei der Montage des Gassackmoduls mit minimalem Kraftaufwand verschwenken.

Gemäß einer Ausführungsform der Lenkvorrichtungsbaugruppe liegt zwischen der Ausgangsstellung und der Endmontagestellung des Rasthebels eine Schwenkbewegung von etwa 90°. Die vorteilhafte Konstellation, dass sich in der Endmontagestellung des Rasthebels der zweite Schenkel in radialer Richtung erstreckt und in der Ausgangsstellung des Rasthebels der erste Schenkel in radialer Richtung erstreckt, lässt sich bei einer Schwenkbewegung von 90° einfach realisieren.

Das Federelement ist bevorzugt eine am Träger befestigte Blattfeder. Dies ist besonders vorteilhaft, weil Blattfedern nur einen minimalen Bauraumbedarf aufweisen sowie darüber hinaus einfach und preiswert herstellbar sind.

Insbesondere kann das Federelement den Rasthebel abhängig von dessen Schwenkposition in die jeweils nähergelegene Ausgangs- oder Endmontagestellung beaufschlagen. Das Federelement unterstützt in diesem Fall jeweils die Endphase des Montage- und Demontagevorgangs eines Gassackmoduls, sodass ein Monteur sowohl bei der Montage als auch bei der Demontage entlastet wird.

Gemäß einer weiteren Ausführungsform der Lenkvorrichtungsbaugruppe ist der Träger fest mit dem ersten Positionierungskörper verbunden, insbesondere einstückig mit dem ersten Positionierungskörper ausgebildet. Insbesondere dann, wenn der Träger bereits bei der Herstellung des Positionierungskörpers einstückig integriert wird, lässt sich in vorteilhafter Weise die Toleranzkette verkürzen und damit letztlich auch das Spaltmaß zwischen den beiden Positionierungskörpern minimieren.

Die am zweiten Positionierungskörper ausgebildete Rastkontur ist bevorzugt eine Ausnehmung, insbesondere eine in Umfangsrichtung verlaufende Umfangsnut. Eine solche Rastkontur lässt sich bei der Herstellung des zweiten Positionierungskörpers fertigungstechnisch einfach und preiswert anformen.

Ferner kann der zweite Positionierungskörper eine Führungsnut zur axialen Führung des freien Schenkelendes des ersten Schenkels aufweisen, wobei der Anschlag zum Verschwenken des Rasthebels an einem axialen Ende der Führungsnut vorgesehen ist. Diese axiale Montageführung ermöglicht eine einfache Integration des Anschlags zum Verschwenken des Rasthebels und sorgt darüber hinaus für eine gewünschte Ausrichtung der beiden Positionierungskörper, das heißt des Gassackmoduls und der Lenkvorrichtung, in Umfangsrichtung.

Besonders bevorzugt entspricht der erste Positionierungskörper der Lenkvorrichtung und der zweite Positionierungskörper dem Gassackmodul. Alternativ sind aber selbstverständlich auch Ausführungsvarianten denkbar, bei denen der erste Positionierungskörper dem Gassackmodul und der zweite Positionierungskörper der Lenkvorrichtung entspricht.

Die Erfindung umfasst im Übrigen auch ein Verfahren zur Montage eines Gassackmoduls an einer Lenkvorrichtung eines Kraftfahrzeugs mittels einer oben beschriebenen Lenkvorrichtungsbaugruppe, wobei der eine der beiden Positionierungskörper einen im Wesentlichen starren Fanghaken und der andere der beiden Positionierungskörper ein elastisches Rastelement zur Verrastung mit dem Fanghaken aufweist, und wobei das Verfahren die folgenden Schritte umfasst:
- Der zweite Positionierungskörper wird dem ersten Positionierungskörper in axialer Montagerichtung zugeführt, insbesondere wobei der zweite Positionierungskörper am ersten Positionierungskörper axial geführt ist;
- das freie Schenkelende des ersten Schenkels gelangt in Kontakt mit dem Anschlag am zweiten Positionierungskörper, wodurch der Rasthebel von seiner Ausgangsstellung in seine Endmontagestellung verschwenkt wird und in der Endmontagestellung mit der Rastkontur des zweiten Positionierungskörpers verrastet, wobei
- das elastische Rastelement mit dem Fanghaken verrastet, bevor der Rasthebel seine Endmontagestellung erreicht.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 eine perspektivische Explosionsansicht einer erfindungsgemäßen Lenkvorrichtungsbaugruppe;
- Figur 2 eine perspektivische Ansicht der Lenkvorrichtungsbaugruppe gemäß Figur 1 vor ihrem Zusammenbau;
- Figur 3 einen Schnitt durch die Lenkvorrichtungsbaugruppe gemäß Figur 2 vor ihrem Zusammenbau;
- Figur 4 einen Schnitt durch die Lenkvorrichtungsbaugruppe gemäß Figur 2 bei ihrem Zusammenbau; und
- Figur 5 einen Schnitt durch die Lenkvorrichtungsbaugruppe gemäß Figur 2 nach ihrem Zusammenbau;

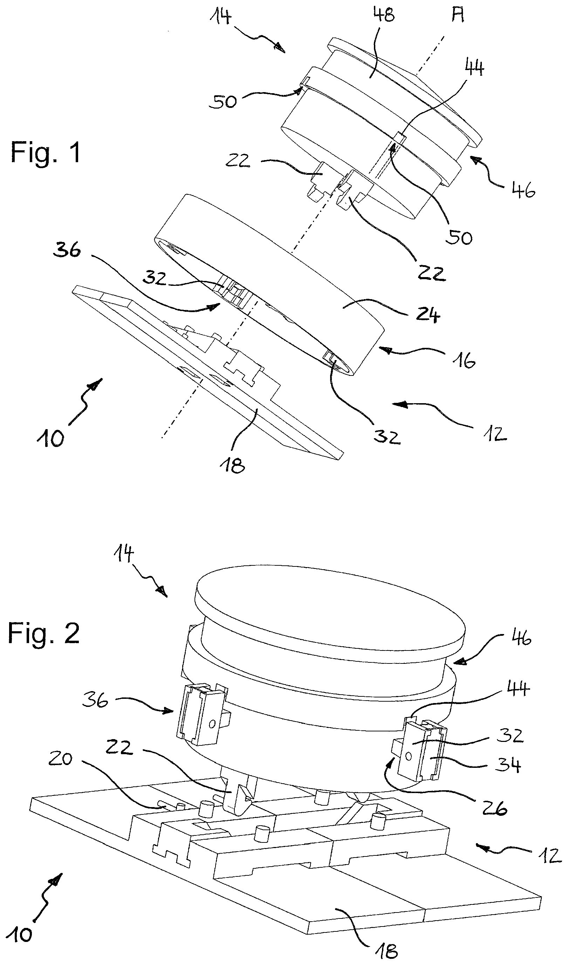

Die Figuren 1 bis 5 zeigen eine Lenkvorrichtungsbaugruppe 10 zur Positionierung und Fixierung eines Gassackmoduls an einer um eine Lenkachse drehbaren Lenkvorrichtung eines Kraftfahrzeugs, mit einem ersten Positionierungskörper 12 und einem zweiten Positionierungskörper 14.

In der dargestellten Ausführungsform der Lenkvorrichtungsbaugruppe 10 entspricht der erste Positionierungskörper 12 der Lenkvorrichtung der zweite Positionierungskörper 14 dem Gassackmodul. Die Lenkvorrichtung ist dabei insbesondere ein Lenkrad, wobei in den Figuren lediglich Ausschnitte des Lenkrads im Nabenbereich schematisch angedeutet sind.

Alternativ sind natürlich auch Ausführungsvarianten der Lenkvorrichtungsbaugruppe 10 denkbar, bei denen der erste Positionierungskörper 12 dem Gassackmodul und der zweite Positionierungskörper 14 der Lenkvorrichtung entspricht.

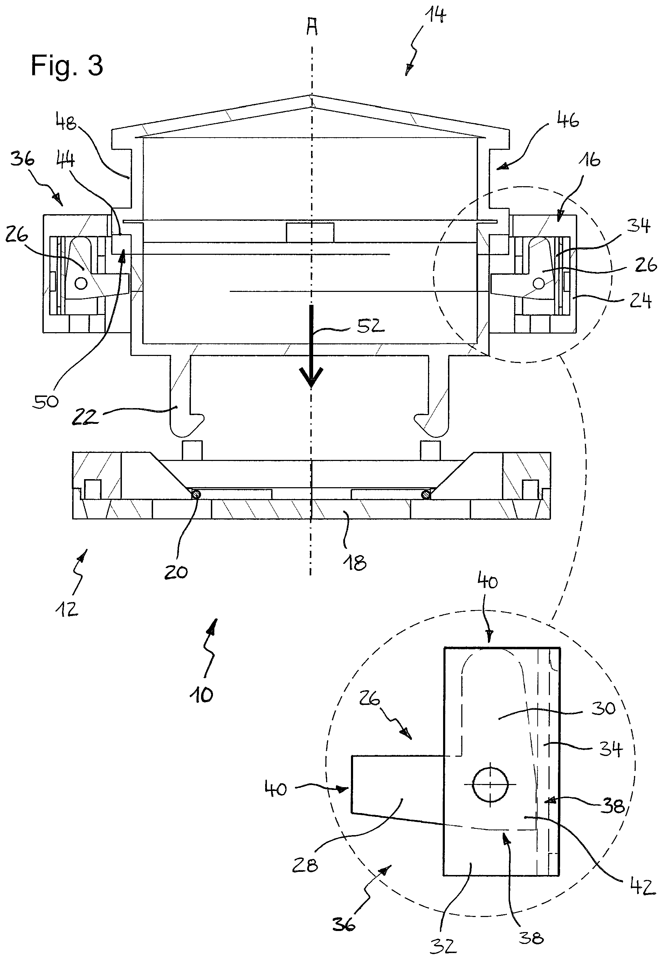

Das Gassackmodul weist eine Modullängsachse A auf und wird bei seiner Montage in einer axialen Montagerichtung 52 bewegt, bis es mit der Lenkvorrichtung verrastet (vgl. Figuren 3 bis 5). Eine Demontage des Gassackmoduls erfolgt in einer entgegengesetzten axialen Demontagerichtung. Die Modullängsachse A erstreckt sich im vorliegenden Fall parallel zur Lenkachse der Lenkvorrichtung und kann insbesondere mit dieser identisch sein.

Der als Lenkvorrichtung ausgeführte erste Positionierungskörper 12 umfasst eine Blende 16, die im zusammengebauten Zustand der Lenkvorrichtungsbaugruppe 10 zumindest teilweise sichtbar ist und an den als Gassackmodul ausgeführten zweiten Positionierungskörper 14 angrenzt. Ferner umfasst die Lenkvorrichtung ein Skelett, insbesondere ein aus dem Stand der Technik allgemein bekanntes Lenkradskelett mit einem Kranzabschnitt, einem Speichenabschnitt und einem Nabenabschnitt. Ein in den Figuren schematisch angedeutetes Verankerungsbauteil 18 für das Gassackmodul ist ein Skelettabschnitt, insbesondere ein Nabenabschnitt eines Lenkradskeletts, oder eine fest mit dem Skelett verbundene Zwischenplatte der Lenkvorrichtung. An diesem Verankerungsbauteil 18 ist ein als Rastfeder ausgeführtes, elastisches Rastelement 20 vormontiert, welches bei der Montage des Gassackmoduls an der Lenkvorrichtung mit einem im Wesentlichen starren Fanghaken 22 des Gassackmoduls eine Rastverbindung ausbildet.

Die Figur 2 zeigt die Lenkvorrichtungsbaugruppe 10 gemäß Figur 1 vor ihrem Zusammenbau, wobei eine in Figur 1 vorgesehene Umfangswand 24 der Blende 16 hier nicht dargestellt ist, um weitere Komponenten des ersten Positionierungskörpers 12 besser erkennen zu können.

So umfasst der erste Positionierungskörper 12 einen Rasthebel 26, der einen ersten Schenkel 28 sowie einen mit dem ersten Schenkel 28 verbundenen zweiten Schenkel 30 aufweist, einen Träger 32, an dem der Rasthebel 26 zwischen einer Ausgangsstellung und einer Endmontagestellung schwenkbar gelagert ist, und ein Federelement 34 zur Beaufschlagung des Rasthebels 26 in die Endmontagestellung.

Der Rasthebel 26, der Träger 32 und das Federelement 34 bilden eine Rasthebeleinheit 36, wobei der erste Positionierungskörper 12 wenigstens drei Rasthebeleinheiten 36 aufweist. Im dargestellten Ausführungsbeispiel sind an der Umfangswand 24 der Blende 16 innenseitig vier in Umfangsrichtung gleichmäßig verteilte Rasthebeleinheiten 36 vorgesehen.

Der Träger 32 ist mit dem ersten Positionierungskörper 12, konkret mit der Blende 16 des ersten Positionierungskörpers 12, fest verbunden, wobei der Träger 32 im vorliegenden Fall sogar einstückig in die Blende 16 integriert ist.

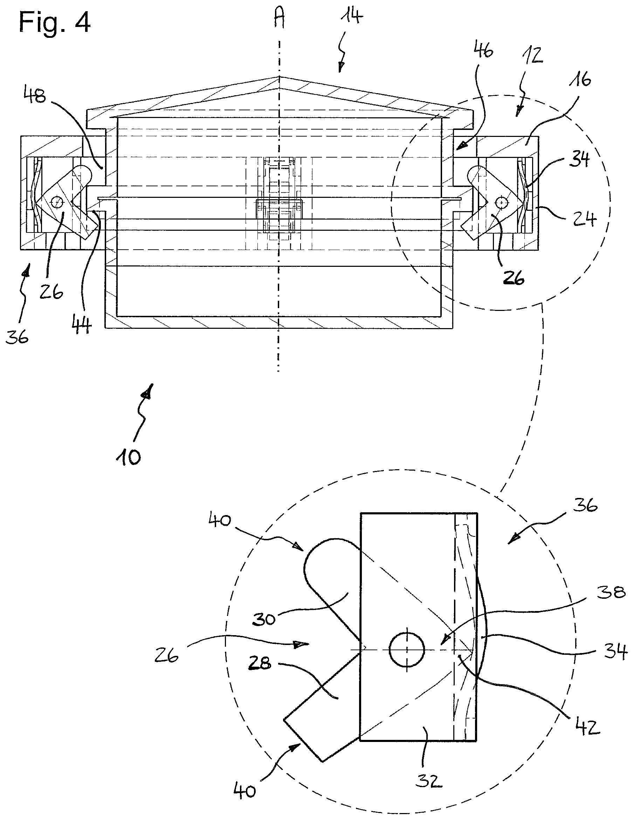

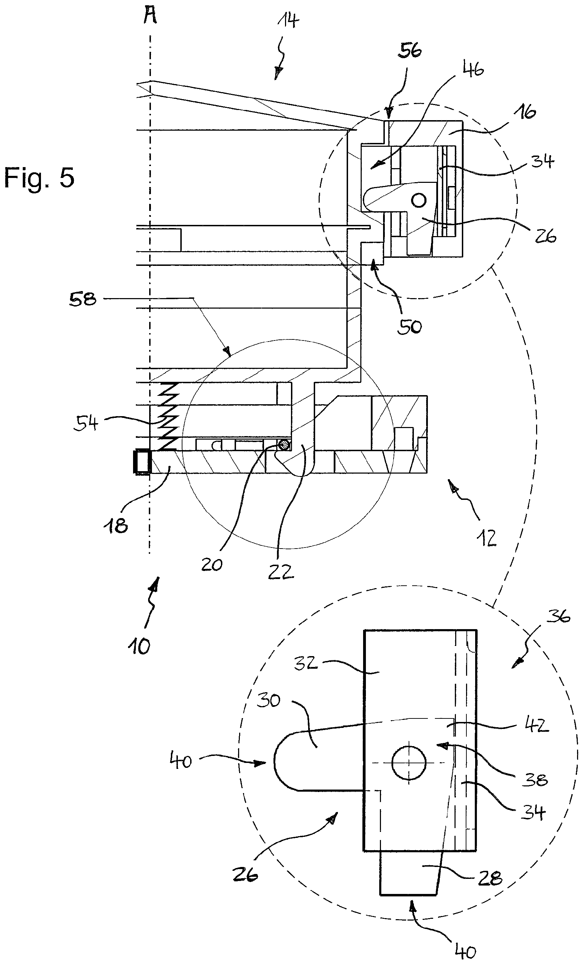

Die Figuren 3 bis 5 zeigen Längsschnitte der Lenkvorrichtungsbaugruppe 10, wobei in Figur 3 ein Zustand vor der Montage, in Figur 4 ein Zustand während der Montage und in Figur 5 ein Zustand nach der Montage des zweiten Positionierungskörpers 14 am ersten Positionierungskörper 12 dargestellt ist. Dementsprechend befindet sich jeder Rasthebel 26 gemäß Figur 3 in seiner Ausgangsstellung, gemäß Figur 4 in einer Zwischenstellung und gemäß Figur 5 in seiner Endmontagestellung.

Speziell anhand der Detailausschnitte der Figuren 3 bis 5 wird deutlich, dass die beiden Schenkel 28, 30 des Rasthebels 26 an einem Schenkelende 38 miteinander verbunden sind und sich unter einem vorgegebenen Winkel jeweils zu einem entgegengesetzten freien Schenkelende 40 erstrecken, wobei die beiden Schenkel 28, 30 des Rasthebels 26 insbesondere einen Winkel von etwa 90° einschließen. Im Bereich der miteinander verbundenen Schenkelenden 38 liegt eine Schwenkachse des Rasthebels 26, über die der Rasthebel 26 schwenkbar am Träger 32 gelagert ist.

Mit Bezug auf die Lenkachse und die Modullängsachse A erstreckt sich in der Ausgangsstellung des Rasthebels 26 (Figur 3) der erste Schenkel 28 und in der Endmontagestellung des Rasthebels 26 (Figur 5) der zweite Schenkel 30 im Wesentlichen in radialer Richtung.

Dementsprechend liegt zwischen der Ausgangsstellung und der Endmontagestellung des Rasthebels 26 eine Schwenkbewegung von im Wesentlichen 90°.

Das Federelement 34 der Rasthebeleinheit 36 ist gemäß den Figuren 3 bis 5 eine am Träger 32 befestigte Blattfeder. Dieses Federelement 34 ist in der Ausgangsstellung des Rasthebels 26 gemäß Figur 3 und der Endmontagestellung des Rasthebels 26 gemäß Figur 5 weitgehend entspannt oder weist allenfalls eine gewisse Restspannung auf. Beim Verschwenken des Rasthebels 26 zwischen seiner Ausgangsstellung und seiner Endmontagestellung wird das Federelement 34 durch einen Rasthebelvorsprung 42 verformt und damit gespannt. Im vorliegenden Fall erreicht das Federelement 34 seine maximale Verformung etwa in der Mitte zwischen Ausgangsstellung und Endmontagestellung des schwenkbaren Rasthebels 26, wie in Figur 4 veranschaulicht.

Dementsprechend beaufschlagt das Federelement 34 den Rasthebel 26 abhängig von dessen aktueller Schwenkposition in die jeweils nähergelegene Ausgangs- oder Endmontagestellung.

Der als Gassackmodul ausgeführte zweite Positionierungskörper 14 umfasst einen axialen Anschlag 44 für das freie Schenkelende 40 des ersten Schenkels 28 zum Verschwenken des Rasthebels 26 von der Ausgangsstellung in die Endmontagestellung.

Bevorzugt weist der zweite Positionierungskörper 14 eine Führungsnut 50 zur axialen Führung des freien Schenkelendes 40 des ersten Schenkels 28 auf, wobei der Anschlag 44 zum Verschwenken des Rasthebels 26 an einem axialen Nutende der Führungsnut 50 vorgesehen ist. Eine axiale Abmessung der Führungsnut 50 an der Außenseite des Gassackmoduls ist im vorliegenden Ausführungsbeispiel der Lenkvorrichtungsbaugruppe 10 vergleichsweise gering, sodass sich während des Montagevorgangs erst recht spät eine Axialführung einstellt. Um bei der Montage des Gassackmoduls bereits frühzeitig eine Axialführung zu realisieren erstreckt sich die Führungsnut 50 in alternativen Ausführungsvarianten an der Außenseite des Gassackmoduls axial weiter in Richtung zum Verankerungsbauteil 18, wie in Figur 1 gestrichelt angedeutet.

Der zweite Positionierungskörper 14 umfasst ferner eine Rastkontur 46 zur Verrastung mit dem freien Schenkelende 40 des zweiten Schenkels 30 in der Endmontagestellung des Rasthebels 26. Diese Rastkontur 46 ist gemäß Figur 1 als Ausnehmung an der Außenseite des zweiten Positionierungskörpers 14 ausgeführt, insbesondere als in Umfangsrichtung verlaufende Umfangsnut 48.

Wie bereits oben erwähnt, weist einer der beiden Positionierungskörper 12, 14, hier der als Gassackmodul ausgebildete zweite Positionierungskörper 14, den im Wesentlichen starren Fanghaken 22 und der andere der beiden Positionierungskörper 12, 14, hier der als Lenkvorrichtung ausgebildete erste Positionierungskörper 12, das elastisches Rastelement 20 zur Verrastung mit dem Fanghaken 22 auf.

Anhand der Figuren 3 bis 5 wird im Folgenden die Montage des Gassackmoduls an der Lenkvorrichtung eines Kraftfahrzeugs mittels der oben beschriebenen Lenkvorrichtungsbaugruppe 10 erläutert.

Gemäß Figur 3 wird zunächst der zweite Positionierungskörper 14 dem ersten Positionierungskörper 12 in axialer Montagerichtung 52 zugeführt, wobei sich der Rasthebel 26 in seiner Ausgangsstellung befindet. Dabei kann der zweite Positionierungskörper 14 über die Führungsnut 50 und den darin eingreifenden Rasthebel 26 in axialer Richtung zumindest abschnittsweise am ersten Positionierungskörper 12 geführt werden.

Bei dieser axialen Relativbewegung der beiden Positionierungskörper 12, 14 gelangt das freie Schenkelende 40 des ersten Schenkels 28 in Kontakt mit dem Anschlag 44 am zweiten Positionierungskörper 14, wodurch der Rasthebel 26 verschwenkt und das Federelement 34 gespannt wird, wie in Figur 4 dargestellt. Nach dem Überwinden einer Maximalverformung des Federelements 34 in einer Zwischenstellung des Rasthebels 26 wird der zweite Positionierungskörper 14 weiter in Montagerichtung 52 bewegt, bis der Rasthebel 26 unterstützt von der Federkraft des Federelements 34 in die als Umfangsnut 48 ausgebildete Rastkontur 46 des zweiten Positionierungskörpers 14 schnappt und damit seine Endmontagestellung einnimmt.

Bevor jedoch der Rasthebel 26 seine Endmontagestellung erreicht, verrastet bereits das elastische Rastelement 20 mit dem Fanghaken 22.

Somit erfolgt die Feinpositionierung des Gassackmoduls relativ zur Lenkvorrichtung im normalen Fahrbetrieb, das heißt also vor einer Aktivierung des Gassackmoduls, durch die Rastverbindung zwischen dem Rasthebel 26 und der Rastkontur 46, während das elastische Rastelement 20 in axialer Richtung vom Fanghaken 22 vorzugsweise geringfügig beabstandet ist.

Eine Rastverbindung 58 zwischen dem elastischen Rastelement 20 und dem Fanghaken 22 wird erst nach einer Aktivierung des Gassackmoduls mechanisch beansprucht und stellt dann sicher, dass sich das Gassackmodul auch bei hohen auftretenden Kräften nicht von der Lenkvorrichtung trennt, sondern zuverlässig mit dieser verbunden bleibt.

Im normalen Fahrbetrieb erfolgt die axiale und radiale Positionierung zwischen dem Gassackmodul, insbesondere einem Modulgehäuse des Gassackmoduls, und der Lenkvorrichtung, insbesondere einer Blende 16 der Lenkvorrichtung, somit ausschließlich über den Rasthebel 26.

Gemäß Figur 5 ist eine Feder 54 vorgesehen, beispielsweise eine Modulauswurf- oder Hupenfeder, die eine Unterkante der Umfangsnut 48 axial gegen den vom Federelement 34 in der Endmontagestellung gehaltenen Rasthebel 26 beaufschlagt somit für eine präzise axiale Ausrichtung des Gassackmoduls sorgt.

Die radiale Ausrichtung des Gassackmoduls erfolgt über die in Umfangsrichtung verteilt angeordneten Rasthebel 26 und hängt im Wesentlichen nur von der Länge des zweiten Schenkels 30 ab, konkret von einem Abstand des freien Schenkelendes 40 zur Schwenkachse des Rasthebels 26.

Infolge dieser kurzen Toleranzketten ist mit vergleichsweise geringem Aufwand eine besonders exakte axiale und radiale Feinpositionierung des Gassackmoduls relativ zur Lenkvorrichtung möglich. Auf diese Weise lassen sich auch hohe Spaltmaßanforderungen erfüllen, die beispielsweise für einen Spalt 56 zwischen einer Modulabdeckung des Gassackmoduls und der Blende 16 der Lenkvorrichtung Spaltbreiten von deutlich unter 1 mm, insbesondere von etwa 0,5 mm vorsehen.

## Patentansprüche

1. Lenkvorrichtungsbaugruppe zur Positionierung und Fixierung eines Gassackmoduls an einer um eine Lenkachse drehbaren Lenkvorrichtung eines Kraftfahrzeugs,
mit einem ersten Positionierungskörper (12) umfassend
einen Rasthebel (26), der einen ersten Schenkel (28) sowie einen mit dem ersten Schenkel (28) verbundenen zweiten Schenkel (30) aufweist, und
einen Träger (32), an dem der Rasthebel (26) zwischen einer Ausgangsstellung und einer Endmontagestellung schwenkbar gelagert ist,
wobei die beiden Schenkel (28, 30) des Rasthebels (26) an einem Schenkelende (38) miteinander verbunden sind und sich unter einem vorgegebenen Winkel jeweils zu einem entgegengesetzten freien Schenkelende (40) erstrecken, sowie
mit einem zweiten Positionierungskörper (14) umfassend
einen Anschlag (44) für das freie Schenkelende (40) des ersten Schenkels (28) zum Verschwenken des Rasthebels (26) von der Ausgangsstellung in die Endmontagestellung,
**dadurch gekennzeichnet, dass** der zweite Positionierungskörper (14) eine Rastkontur (46) zur Verrastung mit dem freien Schenkelende (40) des zweiten Schenkels (30) in der Endmontagestellung des Rasthebels (26) aufweist, wobei ein Federelement (34) zur Beaufschlagung des Rasthebels (26) in die Endmontagestellung vorgesehen ist.

2. Lenkvorrichtungsbaugruppe nach Anspruch 1, **dadurch gekennzeichnet, dass** sich in der Endmontagestellung des Rasthebels (26) der zweite Schenkel (30) im Wesentlichen in radialer Richtung erstreckt, insbesondere wobei sich in der Ausgangsstellung des Rasthebels (26) der erste Schenkel (28) im Wesentlichen in radialer Richtung erstreckt.

3. Lenkvorrichtungsbaugruppe nach Anspruch 1 oder 2, **dadurch gekennzeichnet, dass** zwischen der Ausgangsstellung und der Endmontagestellung des Rasthebels (26) eine Schwenkbewegung von im Wesentlichen 90° liegt.

4. Lenkvorrichtungsbaugruppe nach einem der vorhergehenden Ansprüche, **dadurch gekennzeichnet, dass** das Federelement (34) eine am Träger (32) befestigte Blattfeder ist.

5. Lenkvorrichtungsbaugruppe nach einem der vorhergehenden Ansprüche, **dadurch gekennzeichnet, dass** das Federelement (34) den Rasthebel (26) abhängig von dessen Schwenkposition in die jeweils nähergelegene Ausgangsstellung oder Endmontagestellung beaufschlagt.

6. Lenkvorrichtungsbaugruppe nach einem der vorhergehenden Ansprüche, **dadurch gekennzeichnet, dass** der Träger (32) fest mit dem ersten Positionierungskörper (12) verbunden, insbesondere einstückig mit dem ersten Positionierungskörper (12) ausgebildet ist.

7. Lenkvorrichtungsbaugruppe nach einem der vorhergehenden Ansprüche, **dadurch gekennzeichnet, dass** die am zweiten Positionierungskörper (14) ausgebildete Rastkontur (46) eine Ausnehmung, insbesondere eine in Umfangsrichtung verlaufende Umfangsnut (48) ist.

8. Lenkvorrichtungsbaugruppe nach einem der vorhergehenden Ansprüche, **dadurch gekennzeichnet, dass** der zweite Positionierungskörper (14) eine Führungsnut (50) zur axialen Führung des freien Schenkelendes (40) des ersten Schenkels (28) aufweist, wobei der Anschlag (44) zum Verschwenken des Rasthebels (26) an einem axialen Nutende der Führungsnut (50) vorgesehen ist.

9. Lenkvorrichtungsbaugruppe nach einem der vorhergehenden Ansprüche, **dadurch gekennzeichnet, dass** der erste Positionierungskörper (12) der Lenkvorrichtung und der zweite Positionierungskörper (14) dem Gassackmodul entspricht.

10. Lenkvorrichtungsbaugruppe nach einem der Ansprüche 1 bis 8, **dadurch gekennzeichnet, dass** der erste Positionierungskörper (12) dem Gassackmodul und der zweite Positionierungskörper (14) der Lenkvorrichtung entspricht.

11. Verfahren zur Montage eines Gassackmoduls an einer Lenkvorrichtung eines Kraftfahrzeugs mittels einer Lenkvorrichtungsbaugruppe (10) nach einem der vorhergehenden Ansprüche,
wobei der eine der beiden Positionierungskörper (12, 14) einen im Wesentlichen starren Fanghaken (22) und der andere der beiden Positionierungskörper (14, 12) ein elastisches Rastelement (20) zur Verrastung mit dem Fanghaken (22) aufweist, und
wobei das Verfahren die folgenden Schritte umfasst:
- Der zweite Positionierungskörper (14) wird dem ersten Positionierungskörper (12) in axialer Montagerichtung zugeführt, insbesondere wobei der zweite Positionierungskörper (14) am ersten Positionierungskörper (12) axial geführt wird;
- das freie Schenkelende (40) des ersten Schenkels (28) gelangt in Kontakt mit dem Anschlag (44) am zweiten Positionierungskörper (14), wodurch der Rasthebel (26) von seiner Ausgangsstellung in seine Endmontagestellung verschwenkt wird und in der Endmontagestellung mit der Rastkontur (46) des zweiten Positionierungskörpers (14) verrastet, wobei
- das elastische Rastelement (20) mit dem Fanghaken (22) verrastet, bevor der Rasthebel (26) seine Endmontagestellung erreicht.

## Claims

1. A steering device assembly for positioning and fastening an airbag module on a steering device of a motor vehicle which steering device can be rotated about a steering axis,
comprising a first positioning body (12) which has
a detent lever (26) including a first leg (28) and a second leg (30) connected to the first leg (28), and
a carrier (32) on which the detent lever (26) is mounted for pivoting between an initial position and a final assembly position,
the two legs (28, 30) of the detent lever (26) being connected to each other at one leg end (38) and each extending to an opposite free leg end (40) at a specified angle, and
comprising a second positioning body (14) which has
a stop (44) for the free leg end (40) of the first leg (28) for pivoting the detent lever (26) from the initial position into the final assembly position,
**characterized in that** the second positioning body (14) has a detent contour (46) for locking with the free leg end (40) of the second leg (30) in the final assembly position of the detent lever (26), wherein a spring element (34) is provided for loading the detent lever (26) into the final assembly position.

2. The steering device assembly according to claim 1, **characterized in that** in the final assembly position of the detent lever (26) the second leg (30) extends substantially in the radial direction, especially in the initial position of the detent lever (26) the first leg (28) extending substantially in the radial direction.

3. The steering device assembly according to claim 1 or 2, **characterized in that** a pivoting movement of substantially 90° lies between the initial position and the final assembly position of the detent lever (26).

4. The steering device assembly according to any one of the preceding claims, **characterized in that** the spring element (34) is a leaf spring attached to the carrier (32).

5. The steering device assembly according to any one of the preceding claims, **characterized in that** the spring element (34) loads the detent lever (26) depending on the pivoting position thereof into the initial position or the final assembly position, whichever is closer.

6. The steering device assembly according to any one of the preceding claims, **characterized in that** the carrier (32) is firmly connected to the first positioning body (12), especially formed integrally with the first positioning body (12).

7. The steering device assembly according to any one of the preceding claims, **characterized in that** the detent contour (46) formed on the second positioning body (14) is a recess, especially a peripheral groove (48) extending in the peripheral direction.

8. The steering device assembly according to any one of the preceding claims, **characterized in that** the second positioning body (14) includes a guide groove (50) for axially guiding the free leg end (40) of the first leg (28), the stop (44) being provided for pivoting the detent lever (26) at an axial groove end of the guide groove (50).

9. The steering device assembly according to any one of the preceding claims, **characterized in that** the first positioning body (12) corresponds to the steering device and the second positioning body (14) corresponds to the airbag module.

10. The steering device assembly according to any one of the claims 1 to 8, **characterized in that** the first positioning body (12) corresponds to the airbag module and the second positioning body (14) corresponds to the steering device.

11. A method for installing an airbag module on a steering device of a motor vehicle by means of a steering device assembly (10) according to any one of the preceding claims,
wherein the one of the two positioning bodies (12, 14) includes a substantially rigid catch hook (22) and the other of the two positioning bodies (14, 12) includes an elastic detent element (20) for locking with the catch hook (22), and
wherein the method comprises the following steps:
- the second positioning body (14) is fed to the first positioning body (12) in the axial assembly direction, especially with the second positioning body (14) being axially guided on the first positioning body (12);
- the free leg end (40) of the first leg (28) comes into contact with the stop (44) on the second positioning body (14), thus causing the detent lever (26) to be pivoted from its initial position to its final assembly position and, in the final assembly position, to lock with the detent contour (46) of the second positioning body (14), wherein
- the elastic detent element (20) locks with the catch hook (22) before the detent lever (26) reaches its final assembly position.

## Revendications

1. Ensemble de dispositif de direction pour le positionnement et la fixation d'un module de coussin gonflable sur un dispositif de direction d'un véhicule automobile pouvant tourner autour d'un axe de direction,
avec un premier corps de positionnement (12) comprenant
un levier d'encliquetage (26) qui présente une première branche (28) ainsi qu'une deuxième branche (30) reliée à la première branche (28), et
un support (32) sur lequel le levier d'encliquetage (26) est monté de manière à pouvoir pivoter entre une position de départ et une position de montage finale,
pour lequel les deux branches (28, 30) du levier d'encliquetage (26) sont reliées l'une à l'autre à une extrémité de branche (38) et s'étendent sous un angle prédéterminé respectivement vers une extrémité de branche libre opposée (40), ainsi que
avec un deuxième corps de positionnement (14) comprenant
une butée (44) pour l'extrémité de branche libre (40) de la première branche (28) pour faire pivoter le levier d'encliquetage (26) de la position initiale à la position de montage finale,
**caractérisé en ce que** le deuxième corps de positionnement (14) présente un contour d'encliquetage (46) pour l'encliquetage avec l'extrémité de branche libre (40) de la deuxième branche (30) dans la position de montage finale du levier d'encliquetage (26), pour lequel un élément ressort (34) est prévu pour solliciter le levier d'encliquetage (26) dans la position de montage finale.

2. Ensemble de dispositif de direction selon la revendication 1, **caractérisé en ce que**, dans la position de montage finale du levier d'encliquetage (26), la deuxième branche (30) s'étend sensiblement dans la direction radiale, en particulier pour lequel dans la position initiale du levier d'encliquetage (26), la première branche (28) s'étend sensiblement dans la direction radiale.

3. Ensemble de dispositif de direction selon la revendication 1 ou 2, **caractérisé en ce qu'**il existe un mouvement de pivotement de sensiblement 90° entre la position initiale et la position de montage finale du levier d'encliquetage (26).

4. Ensemble de dispositif direction selon l'une quelconque des revendications précédentes, **caractérisé en ce que** l'élément ressort (34) est un ressort à lame fixé au support (32).

5. Ensemble de dispositif de direction selon l'une des revendications précédentes, **caractérisé en ce que** l'élément ressort (34) sollicite le levier d'encliquetage (26) en fonction de sa position de pivotement dans la position initiale ou la position de montage finale respectivement la plus proche.

6. Ensemble de dispositif de direction selon l'une quelconque des revendications précédentes, **caractérisé en ce que** le support (32) est solidaire du premier corps de positionnement (12), en particulier est réalisé d'une seule pièce avec le premier corps de positionnement (12).

7. Ensemble de dispositif de direction selon l'une des revendications précédentes, **caractérisé en ce que** le contour d'encliquetage (46) formé sur le deuxième corps de positionnement (14) est un évidement, en particulier une rainure périphérique (48) s'étendant dans la direction périphérique.

8. Ensemble de dispositif de direction selon l'une des revendications précédentes, **caractérisé en ce que** le deuxième corps de positionnement (14) présente une rainure de guidage (50) pour le guidage axial de l'extrémité de branche libre (40) de la première branche (28), pour lequel la butée (44) pour le pivotement du levier d'encliquetage (26) est prévue à une extrémité de rainure axiale de la rainure de guidage (50).

9. Ensemble de dispositif de direction selon l'une des revendications précédentes, **caractérisé en ce que** le premier corps de positionnement (12) correspond au dispositif de direction et le deuxième corps de positionnement (14) au module de coussin gonflable.

10. Ensemble de dispositif de direction selon l'une des revendications 1 à 8, **caractérisé en ce que** le premier corps de positionnement (12) correspond au module de coussin gonflable et le deuxième corps de positionnement (14) au dispositif de direction.

11. Procédé de montage d'un module de coussin gonflable sur un dispositif de direction d'un véhicule automobile au moyen d'un ensemble de dispositif de direction (10) selon l'une des revendications précédentes,
pour lequel l'un des deux corps de positionnement (12, 14) comporte un crochet d'accrochage (22) sensiblement rigide et l'autre des deux corps de positionnement (14, 12) comporte un élément d'encliquetage élastique (20) pour l'encliquetage avec le crochet d'accrochage (22), et
pour lequel le procédé comprenant les étapes suivantes :
- le deuxième corps de positionnement (14) est amené au premier corps de positionnement (12) dans la direction de montage axiale, en particulier le deuxième corps de positionnement (14) est guidé axialement sur le premier corps de positionnement (12) ;
- l'extrémité libre (40) de la première branche (28) vient en contact avec la butée (44) sur le deuxième corps de positionnement (14), ce qui fait que le levier d'encliquetage (26) est pivoté de sa position initiale dans sa position de montage finale et s'encliquette dans la position de montage finale avec le contour d'encliquetage (46) du deuxième corps de positionnement (14), pour lequel
- l'élément d'encliquetage élastique (20) s'encliquette avec le crochet d'accrochage (22) avant que le levier d'encliquetage (26) n'atteigne sa position de montage finale.
